# EUROPÄISCHE PATENTANMELDUNG

(11) **EP 4 799 829 A2**
(43) Veröffentlichungstag der Anmeldung: **02.09.2026**
(21) Anmeldenummer: 26192592.9
(22) Anmeldetag: 06.02.2020
(51) Int. Cl.: B60D 1/64

(54) **VERBINDUNGSEINRICHTUNG, VERBINDUNGSSYSTEM SOWIE SATTELZUG**

(30) Priorität: 21.02.2019 DE 102019202352
(62) Dokumentnummer(n) der früheren Anmeldung(en) nach Art. 76 EPÜ: 20155862.4 / 3 698 992
(71) Anmelder: JOST-Werke Deutschland GmbH, 63263 Neu-Isenburg (DE)
(72) Erfinder: Algüera Gallego, José Manuel, 63739 Aschaffenburg (DE)
(74) Vertreter: WSL Patentanwälte Partnerschaft mbB

(57) **Zusammenfassung**

Die Erfindung betrifft eine Verbindungseinrichtung zum Verbinden von elektrischen und pneumatischen Leitungen zwischen einem Zugfahrzeug und einem Auflieger mit einem ersten Ende, einem zweiten Ende und mindestens zwei die beiden Enden verbindenden Leitungen , wobei an dem ersten Ende zumindest ein erstes pneumatisches Steckelement und zumindest ein erstes elektrisches Steckelement angeordnet ist und wobei an dem zweiten Ende eine erste Steckeinheit angeordnet ist, die zumindest ein erstes pneumatisches Anschlusselement und zumindest ein erstes elektrisches Anschlusselement aufweist.

## Beschreibung

Die vorliegende Erfindung betrifft eine Verbindungseinrichtung zum Verbinden von elektrischen und pneumatischen Leitungen zwischen einem Zugfahrzeug und einem Auflieger, ein Verbindungssystem für einen Sattelzug mit einer Verbindungseinrichtung sowie einen Sattelzug mit einem einer Verbindungseinrichtung oder einem Verbindungssystem.

Sattelzüge sind eine Untergruppe der Lastkraftwagen (LKW) und umfassen ein Zugfahrzeug und einen Auflieger. Bei herkömmlichen Sattelzügen ist das Zugfahrzeug motorisiert und der Auflieger nicht motorisiert. Zum Bewegen des Aufliegers ist somit ein Zugfahrzeug erforderlich.

Sattelzüge werden vorrangig zum Transport von Gütern eingesetzt. Zugfahrzeug und Auflieger sind lösbar aneinander gekoppelt. Es ist daher möglich, einen Auflieger abzustellen, also das Zugfahrzeug von dem Auflieger abzukoppeln. Auf diese Weise ist es möglich, den Auflieger zu be- oder entladen, während das Zugfahrzeug mitsamt Fahrer anderweitig eingesetzt werden kann.

Das Koppeln von Zugfahrzeug und Auflieger umfasst eine mechanische Kopplung, die regelmäßig mittels einer Sattelkupplung und einem Königszapfen erfolgt. Zusätzlich werden Zugfahrzeug und Auflieger mittels pneumatischen und elektrischen Leitungen miteinander verbunden. Über die pneumatischen Leitungen stellt das Zugfahrzeug dem Auflieger Druckluft für das Bremssystem des Aufliegers zur Verfügung. Die elektrischen Leitungen dienen vor allem der Beleuchtung (Blinker, Rücklicht, etc.) des Aufliegers, aber auch eine Kühlung des Aufliegers erfolgt mittels elektrischer, von dem Zugfahrzeug über die elektrischen Leitungen zur Verfügung gestellter Energie.

Die Herstellung der elektrischen und pneumatischen Verbindungen zwischen Zugfahrzeug und Auflieger erfolgt manuell. Häufig ist es der Fahrer, der die Leitungen anbringt. Dieser Prozess ist aufwendig und fehleranfällig.

Die US 5,458,357 offenbart einen Sattelzug, bei dem mehrere Leitungen zur Verbindung von Zugfahrzeug und Auflieger vorgesehen sind. Für die Verbindung ist eine Mehrfachkupplung vorgesehen, mit der mehrere Leitungen gleichzeitig verbunden werden können.

Aus der US 2011/0133430 A1 ist ein Luftbremsenverbindungssystem bekannt, bei dem ein Schlauch zum Verbinden eines Kupplungsteils des Zugfahrzeugs mit einem Kupplungsteils des Aufliegers vorgesehen ist. Der Schlauch weist an beiden Enden ein selbstdichtendendes Ventil auf.

Die DE 41 35 795 A1 offenbart einen Sattelzug, bei dem zwischen den beiden Teilfahrzeugen eine Versorgungskupplung vorgesehen ist, welche sich beim Zusammenkuppeln der beiden Teilfahrzeuge selbsttätig schließt und bei einem Trennen der beiden Teilfahrzeuge voneinander sich selbsttätig öffnet.

Aus der DE 10 2004 062 172 A1 ist ein System zum Verbinden von Versorgungsleitungen zwischen einem Zugfahrzeug und einem daran kuppelbaren Auflieger beschrieben. An dem Zugfahrzeug ist eine Sattelkupplung und ein automatisierbares Leitungskupplungssystem mit mindestens einer Steckerbuchse angeordnet.

Die DE 10 2006 012 800 A1 offenbart einen Kupplungsassistenten zum Verbinden mindestens einer Versorgungsleitung zwischen einem ersten und einem über eine Kupplung daran ankuppelbaren zweiten Fahrzeug. Der Kupplungsassistent umfasst eine an dem zweiten Fahrzeug angeordnete Versorgungskonsole zum Anstecken der mindestens einen Versorgungsleistung.

Die Autonomisierung von Fahrzeugen kann dazu führen, dass in einigen Bereichen, in denen Fahrzeuge autonom oder automatisiert gekuppelt oder abgekuppelt werden, die Anwesenheit von Menschen unerwünscht oder untersagt wird. Es ist daher Aufgabe der Erfindung, die Herstellung der elektrischen und pneumatischen Verbindungen zwischen Zugfahrzeug und Auflieger zu vereinfachen oder so zu gestalten, dass diese zumindest in diesen Bereichen automatisiert werden kann.

Diese Aufgabe wird durch eine erfindungsgemäße Verbindungseinrichtung gelöst.

Die erfindungsgemäße Verbindungseinrichtung zum Verbinden von elektrischen und pneumatischen Leitungen zwischen einem Zugfahrzeug und einem Auflieger weist ein erstes Ende, ein zweites Ende und mehrere die beiden Enden verbindenden Leitungen auf. An dem ersten Ende ist zumindest ein pneumatisches Steckelement und/oder zumindest ein elektrisches Steckelement angeordnet. An dem zweiten Ende ist eine erste Steckeinheit angeordnet, die zumindest ein pneumatisches Anschlusselement und/oder zumindest ein elektrisches Anschlusselement aufweist.

Die pneumatischen und elektrischen Steckelemente der Verbindungseinrichtung sind bevorzugt komplementär zu pneumatischen und elektrischen Steckelementen des Aufliegers.

Die erste Steckeinheit ist bevorzugt komplementär zu einer zweiten Steckeinheit des Zugfahrzeugs.

Das Steckelement kann entweder eine Buchse oder ein Stecker sein. Stecker und Buchse sind komplementäre Komponenten und ergeben gemeinsam eine Steckverbindung.

Bei vorteilhaften Weiterbildungen weist die erste Steckeinheit ein nicht rotati-onssymmetrisches Gehäuse auf. Auf diese Weise kann eine komplementäre zweite Steckeinheit, die bevorzugt ebenfalls ein nicht rotationssymmetrisches Gehäuse aufweist, nur auf eine Art und Weise mit der ersten Steckeinheit verbunden werden. Eine fehlerhafte Verbindung der Steckeinheiten wird auf diese Weise verhindert.

Bei alternativen Ausführungsformen sind die ersten Anschlusselemente bevorzugt zumindest teilweise in drehsymmetrischer Doppelbelegung vorgesehen. Bei einer drehsymmetrischen Doppelbelegung ist ein Anschlusselement doppelt und in identischer Ausführung vorhanden. Die doppelten Anschlusselemente sind drehsymmetrisch um eine Mittelachse der ersten Steckeinheit angeordnet. Zur Herstellung einer Verbindung muss jedoch lediglich eines der doppelt vorhandenen Anschlusselemente mit einem Gegenstück verbunden werden. Der wesentliche Vorteil besteht darin, dass die nur ein Gegenstück für die doppelt vorhandenen Anschlusselemente aufweisende zweite Steckeinheit in zwei zueinander um 180° gedrehten Stellungen mit der ersten Steckeinheit verbunden werden kann. In beiden Stellungen wird das Gegenstück mit einem der beiden doppelt vorhandenen Anschlusselemente gekoppelt.

Bei anderen Ausführungsformen sind das erste pneumatische und das erste elektrische Anschlusselement konzentrisch angeordnet, wobei auch mehrere pneumatische und/oder mehrere elektrische Anschlusselemente konzentrisch angeordnet sein können. Während bei der drehsymmetrischen Doppelbelegung nur zwei Stellungen möglich sind, in denen die erste Steckeinheit angeordnet sein darf, um mit der zweiten Steckeinheit verbunden zu werden, hat eine Drehung um die Mittelachse bei der konzentrischen Anordnung keinen Einfluss. Die erste und die zweite Steckeinheit können miteinander gekoppelt werden, unabhängig davon, welchen Drehwinkel die erste Steckeinheit und die zweite Steckeinheit zueinander aufweisen.

Die erste Steckeinheit weist zumindest ein zentral angeordnetes erstes pneumatisches Anschlusselement auf. Das zentral angeordnete pneumatische Anschlusselement ist bevorzugt drehsymmetrisch um die Mittelachse und die Mittelachse liegt im Zentrum des zentral angeordneten pneumatischen Anschlusselements.

Bei der drehsymmetrischen Doppelbelegung ist das zentral angeordnete erste pneumatische Anschlusselement nicht in Doppelbelegung vorhanden, da es von der Drehung um die Mittelachse unabhängig ist. Es ist jedoch möglich, zusätzlich weitere erste pneumatische Anschlusselemente in drehsymmetrischer Doppelbelegung vorzusehen, sodass insgesamt beispielsweise drei oder fünf erste pneumatische Anschlusselemente vorhanden sind.

Bei der konzentrischen Anordnung ist es ebenfalls vorteilhaft, ein zentral angeordnetes erstes pneumatisches Anschlusselement vorzusehen. Pneumatische Anschlusselemente müssen abgedichtet werden. Durch die zentrale Anordnung kann eine Abdichtung eingespart werden, da nur radial nach außen, nicht aber radial nach innen abgedichtet werden muss.

Bei vorteilhaften Weiterbildungen weist die Verbindungseinrichtung zumindest eine Befestigungseinrichtung auf, mittels der die erste Steckeinheit an einem vorbestimmten Ort an dem Auflieger befestigbar ist. Auf diese Weise wird es möglich, den Verbindungsvorgang zwischen erster und zweiter Steckeinheit zu automatisieren. Bei einem automatischen Verbindungsvorgang steht die Position der ersten Steckeinheit an dem vorbestimmten Ort fest und muss nicht vorab ermittelt werden.

Die Befestigungseinrichtung kann ein- oder mehrteilig ausgebildet sein. Beispielsweise kann die Befestigungseinrichtung einen ersten Teil, der permanent an dem Auflieger angeordnet ist, und einen zweiten Teil, der mit dem ersten Teil lösbar verbunden ist, aufweisen. Wenn die Befestigungseinrichtung einteilig ausgebildet ist, so ist sie bevorzugt an der ersten Steckeinheit befestigt.

Die Befestigungseinrichtung ist bevorzugt zumindest teilweise an der ersten Steckeinheit angeordnet. Auf diese Weise wird eine direkte und sichere Anbringung der ersten Steckeinheit an dem Auflieger ermöglicht.

Es ist wünschenswert, dass die Befestigung der ersten Steckeinheit an dem Auflieger möglichst schnell und für den Benutzer auf einfache Art und Weise erfolgen kann. Bei vorteilhaften Weiterbildungen ist die Befestigungseinrichtung daher mindestens teilweise magnetisch oder weist zumindest ein magnetisches Element auf.

Die Befestigungseinrichtung weist bevorzugt zwei oder drei rechtwinklig zueinander angeordnete plattenförmige Seitenteile auf. Dadurch kann dieser Teil der Befestigungseinrichtung an einer Kante oder einer Ecke des Aufliegers angeordnet werden. Die Ecke des Aufliegers stellt damit eine Möglichkeit für den vorbestimmten Ort dar, an dem die Steckeinheit positioniert werden kann.

Die erste Steckeinheit weist bevorzugt eine erste Ortungseinrichtung auf. Bei einem automatisierten Verbindungsvorgang kann die Position der ersten Steckeinheit auf diese Weise bestimmt werden. Die erste Ortungseinrichtung weist bevorzugt ein Funkelement mit RFID (Radio-frequency identification)-, NFC (Near-field communication)- und/oder BLE (Bluetooth Low Energy)-Technik auf. Vorteilhafterweise ist die erste Ortungseinrichtung passiv, also beispielsweise ein RFID-Transponder. Dadurch muss die Verbindungseinrichtung keinen Energiespeicher aufweisen.

Die Leitungen der Verbindungseinrichtung sind bevorzugt flexibel, insbesondere zumindest teilweise spiralförmig. Auf diese Weise ist die Länge der Leitungen nicht festgelegt, was beispielsweise beim Anordnen der ersten Steckeinheit an dem vorbestimmten Ort von Vorteil ist.

Die ersten Anschlusselemente der ersten Steckeinheit sind bevorzugt Stecker und/oder Buchsen.

Die erste Steckeinheit weist bei vorteilhaften Weiterbildungen ein gemeinsames Gehäuse für die ersten pneumatischen und elektrischen Anschlusselemente auf. Durch das gemeinsame Gehäuse wird die Herstellung der ersten Steckeinheit günstiger.

Bei anderen vorteilhaften Weiterbildungen weist die erste Steckeinheit ein erstes Gehäuse für die ersten pneumatischen Anschlusselemente und ein zweites Gehäuse für die ersten elektrischen Anschlusselemente auf, wobei die Gehäuse vorzugsweise miteinander verbunden sind. Diese Ausführung ermöglicht eine größere Individualisierung der ersten Steckeinheit. So können für unterschiedliche Ausführungsformen beispielsweise gleichartige Gehäuse für die pneumatischen Anschlusselemente und abweichende Gehäuse für die elektrischen Anschlusselemente verwendet werden.

Die Aufgabe der Erfindung wird auch durch ein erfindungsgemäßes Verbindungssystem gelöst.

Das Verbindungssystem für einen Sattelzug weist eine Verbindungseinrichtung mit den oben genannten Merkmalen und ein auf einem Zugfahrzeug des Sattelzugs anbringbares Kupplungssystem mit einer zweiten Steckeinheit auf. Die zweite Steckeinheit ist komplementär zu der ersten Steckeinheit ausgebildet und weist zumindest ein zweites pneumatisches Anschlusselement und zumindest ein zweites elektrisches Anschlusselement auf.

Bei einigen vorteilhaften Weiterbildungen weist die zweite Steckeinheit ein nicht rotationssymmetrisches Gehäuse auf. Eine fehlerhafte Verbindung der Steckeinheiten wird auf diese Weise wie oben hinsichtlich der ersten Steckeinheit ausgeführt verhindert.

Die zweiten Anschlusselemente sind bei manchen Ausführungsformen bevorzugt zumindest teilweise in drehsymmetrischer Doppelbelegung vorgesehen. Die auf diese Weise erreichten Vorteile sind mit denen der drehsymmetrischen Doppelbelegung der ersten Steckeinheit im Wesentlichen identisch. Grundsätzlich ist es jedoch ausreichend, wenn nur eine der beiden Steckeinheiten Anschlusselemente in drehsymmetrischer Doppelbelegung aufweist. Wenn die Anschlusselemente beider Steckeinheiten in drehsymmetrischer Doppelbelegung vorgesehen sind, ist die Verbindung zwischen den Steckeinheiten redundant.

Das zweite pneumatische und das zweite elektrische Anschlusselement sind bei manchen Ausführungsformen bevorzugt konzentrisch angeordnet. Auch hier ergeben sich die oben bezüglich der konzentrischen Anordnung beschriebenen Vorteile.

Die zweite Steckeinheit weist bevorzugt zumindest ein zentral angeordnetes zweites pneumatisches Anschlusselement auf. Wie oben beschrieben ist ein zentrales Anschlusselement von der Drehung der Steckeinheit um die Mittelachse unabhängig.

Das Kupplungssystem weist bevorzugt eine Fangeinrichtung zum Einfangen der ersten Steckeinheit auf. Die Fangeinrichtung ermöglicht es, die erste Steckeinheit im Rahmen eines automatisierten Verbindungsvorgangs so einzufangen, dass sie mit der zweiten Steckeinheit auf einfache Weise verbunden werden kann.

Die Fangeinrichtung weist bevorzugt einen Fangtrichter auf, in dem die zweite Steckeinheit angeordnet ist. Unter einem Fangtrichter ist allgemein eine Vorrichtung zu verstehen, die eine Führung der ersten Steckeinheit zu der zweiten Steckeinheit ermöglicht. Bevorzugt weist der Fangtrichter in einem ersten Endbereich eine Öffnung auf, die größer ist als die Kontur der ersten Steckeinheit. Die zweite Steckeinheit ist in einem gegenüberliegenden zweiten Endbereich angeordnet.

Die Fangeinrichtung ist bevorzugt zusammen mit der zweiten Steckeinheit mittels eines pneumatischen und/oder hydraulischen und/oder elektrischen ersten Aktuators ausfahrbar, insbesondere höhenverstellbar. Wie oben beschrieben wird die erste Steckeinheit bevorzugt an dem Auflieger befestigt. Zur Verbindung der beiden Steckeinheiten miteinander kann die Steckeinheit mittels des Aktuators in Richtung der ersten Steckeinheit bewegt werden, bis die Steckeinheiten verbunden sind.

Anschließend kann der Verbund aus Fangeinrichtung, zweiter Steckeinheit und erster Steckeinheit wieder eingefahren werden. Die erste Steckeinheit wird dabei von dem Auflieger gelöst. Durch das Einfahren wird der Verbund von dem Auflieger entfernt, wodurch verhindert wird, dass der Verbund während der Fahrt durch Bewegungen des Aufliegers (insbesondere bei Kurvenfahrt) beschädigt wird. Dabei ist vorteilhafterweise vorgesehen, dass nach dem Einfahren der gesamte Verbund unterhalb einer Vorderkante des Aufliegers angeordnet ist. So wird auch die erste Steckeinheit vor Beschädigung geschützt.

Die erste Steckeinheit und/oder die zweite Steckeinheit weist bevorzugt zumindest ein Arretiermittel zur lösbaren Befestigung der Steckeinheiten aneinander auf. Durch die Arretierung wird sichergestellt, dass die Verbindung der Steckeinheiten während der Fahrt nicht getrennt wird, beispielsweise durch Erschütterungen. Die Befestigung durch Arretiermittel erfolgt bevorzugt magnetisch und/oder pneumatisch und/oder mittels Reibschluss und/oder mittels Formschluss.

Die Arretiermittel sind bevorzugt automatisch lösbar. Auf diese Weise ist keine manuelle Manipulation der Arretiermittel beim Abstellen eines Aufliegers notwendig. Zum Lösen der Arretiermittel ist vorteilhafterweise zumindest ein zweiter Aktuator vorgesehen. Der zweite Aktuator kann beispielsweise in Form eines Ausstoßers die Steckeinheiten auseinander drücken, wodurch auch die Arretiermittel getrennt werden. Ein solcher Aktuator kann auch dann vorgesehen sein, wenn keine Arretiermittel vorgesehen sind.

Die Aufgabe der Erfindung wird auch durch einen erfindungsgemäßen Sattelzug gelöst.

Der Sattelzug umfasst ein Zugfahrzeug, einen Auflieger und entweder eine Verbindungseinrichtung mit den oben genannten Merkmalen oder ein Verbindungssystem mit den oben genannten Merkmalen. Der Auflieger weist zweite pneumatische und elektrische Steckelemente auf, die komplementär zu den ersten Steckelementen der Verbindungseinrichtung sind.

Die Verbindungseinrichtung kann durch die komplementäre Ausführung das Zugfahrzeug mit dem Auflieger verbinden. Hierzu werden zunächst die Steckelemente der Verbindungseinrichtung mit den Steckelementen des Aufliegers gekoppelt. Anschließend werden die Anschlusselemente der ersten und zweiten Steckeinheiten miteinander verbunden. Zwischen Zugfahrzeug und Auflieger bestehen dann sowohl eine pneumatische wie auch eine elektrische Verbindung.

Vor dem Verbinden der Anschlusselemente kann die erste Steckeinheit an einem vorbestimmten Ort des Aufliegers angeordnet werden. Der Verbindungsvorgang zwischen erster und zweiter Steckeinheit erfolgt dann bevorzugt automatisiert, insbesondere mittels des Kupplungssystems.

Das Zugfahrzeug ist bevorzugt autonom, insbesondere auf Stufe 4 oder 5 der Norm SAE J3016 der Society of Automotive Engineers (SAE).

Das Zugfahrzeug weist bevorzugt einen Antrieb, eine Steuereinheit zur Steuerung des Antriebs, eine Kommunikationseinheit zum Informationsaustausch mit einem Verkehrsleitsystem sowie eine Ortungseinheit zur Lokalisierung des Zugfahrzeugs auf. Auf diese Weise kann der Sattelzug in einem Verkehrsnetz, beispielsweise dem eines Flughafens, eines Logistikzentrums oder eines Werksgeländes eingesetzt werden. Der Antrieb umfasst bevorzugt neben einer Antriebseinheit, beispielsweise einem Elektromotor, auch ein Fahrwerk mit Rädern sowie Lenk- und Bremsmittel.

Die erste Steckeinheit ist bevorzugt an einer Frontwand des Aufliegers befestigt. Auf diese Weise befindet sich die erste Steckeinheit in der Nähe des Zugfahrzeugs, sodass die Leitungen nicht sehr lang sein müssen. Die Befestigung erfolgt bevorzugt mittels der Befestigungseinrichtung.

Die erste Steckeinheit ist bevorzugt oberhalb einer Unterkante der Frontwand des Aufliegers an der Frontwand befestigt. Dadurch kann die Verbindungseinrichtung mit dem Auflieger verbunden werden bevor der Auflieger an das Zugfahrzeug gekoppelt wird. Beispielsweise kann zunächst die Verbindungseinrichtung manuell an dem Auflieger angebracht werden und ein autonomes Zugfahrzeug holt den Auflieger zu einem späteren Zeitpunkt ab. Damit das Zugfahrzeug bei dem Kupplungsvorgang mit dem Auflieger die Verbindungseinrichtung nicht beschädigt, ist die Anordnung oberhalb der Unterkante vorteilhaft.

Die erste Steckeinheit ist bevorzugt an einer Kante oder einer der Frontecken des Aufliegers befestigt. Auflieger weisen in der Regel Standardmaße auf, sodass die Anordnung an einer Frontecke garantiert, dass die Position der ersten Steckeinheit genau definiert ist. Die genaue Positionierung erleichtert die Automatisierung des Verbindungsvorgangs von erster und zweiter Steckeinheit.

Die Haltekraft der Befestigungseinrichtung der ersten Steckeinheit am Auflieger ist bevorzugt größer als die Steckkräfte von erster und zweiter Steckeinheit. Auf diese Weise können die erste und die zweite Steckeinheit automatisch miteinander verbunden werden, ohne dass es eines zusätzlichen Widerstands bei dem Steckvorgang bedürfte.

Die zweite Steckeinheit weist bevorzugt eine zweite Ortungseinrichtung auf, welche mit der ersten Ortungseinrichtung der ersten Steckeinheit zusammenwirkt. Auf diese Weise kann die Relativposition der zweiten Steckeinheit zu der ersten Steckeinheit ermittelt werden. Die Relativposition kann anschließend für die Automatisierung des Verbindungsvorgangs verwendet werden.

Die Erfindung wird nachfolgend anhand der Figuren beispielhaft dargestellt und erläutert. Es zeigt dabei
- Figur 1: schematisch eine Verbindungseinrichtung,
- Figur 2A: einen Auflieger mit einer Verbindungseinrichtung gemäß Figur 1 in einer Seitenansicht,
- Figur 2B: den Auflieger mit Verbindungseinrichtung der Figur 2A in einer Frontalansicht,
- Figur 3: einen Sattelzug während des Kupplungsvorgangs von Zugfahrzeug und Auflieger in einer Seitenansicht,
- Figur 4: den Sattelzug der Figur 3 mit verbundenen Steckeinheiten in einer Seitenansicht,
- Figur 5: den Sattelzug der Figur 3 in fahrbereitem Zustand,
- Figur 6: einen Auflieger mit einer an einer Frontecke angeordneten Verbindungseinrichtung in einer Frontalansicht,
- Figur 7: eine erste Steckeinheit und eine komplementäre zweite Steckeinheit in einer perspektivischen Ansicht,
- Figur 8: ein Kupplungssystem eines Zugfahrzeugs in einer teilweise geschnittenen Ansicht,
- Figur 9: einen Auflieger gemäß einer dritten Ausführungsform in einer perspektivischen Ansicht,
- Figur 9A: das Detail A der Figur 9,
- Figur 10: eine Ausführungsform einer ersten Steckeinheit in einer perspektivischen Schnittansicht,
- Figur 11: eine erste Steckeinheit und eine komplementäre zweite Steckeinheit gemäß einer weiteren Ausführungsform in einer Seitenansicht und
- Figur 12: eine erste Steckeinheit in einer Draufsicht gemäß einer weiteren Ausführungsform.

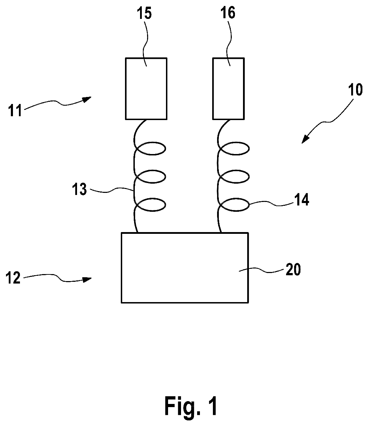

In Figur 1 ist eine Verbindungseinrichtung 10 dargestellt. Die Verbindungseinrichtung 10 weist an einem ersten Ende 11 ein erstes pneumatisches Steckelement 15 und ein erstes elektrisches Steckelement 16 auf. An einem zweiten Ende 12, welches gegenüberliegend zu dem ersten Ende 11 angeordnet ist, weist die Verbindungseinrichtung 10 eine erste Steckeinheit 20 auf. Die erste Steckeinheit 20 weist pneumatische und elektrische Anschlusselemente (hier nicht dargestellt) auf.

Die erste Steckeinheit 20 ist mit dem ersten pneumatischen Steckelement 15 über eine Pneumatikleitung 13 und mit dem ersten elektrischen Steckelement 16 über eine elektrische Leitung 14 verbunden. Die Leitungen 13, 14 sind spiralförmig und damit flexibel.

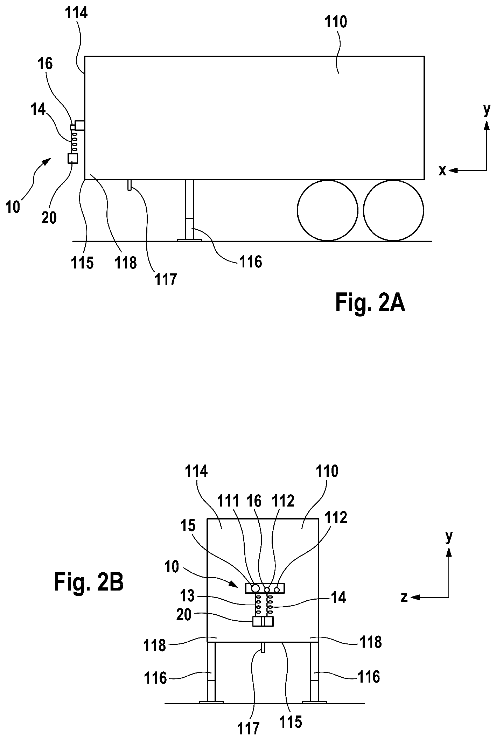

Bei dem in Figur 2A dargestellten Auflieger 110 handelt es sich um einen herkömmlichen Sattelauflieger. Der Auflieger 110 weist einen Königszapfen 117 auf, mittels dem er an ein Zugfahrzeug (hier nicht dargestellt) gekuppelt werden kann. Der Auflieger 110 weist ferner zwei Stützwinden 116 auf (siehe Figur 2B). Die Stützwinden 116 dienen der Abstützung des Aufliegers 110, wenn der Auflieger 110 nicht an ein Zugfahrzeug gekuppelt ist.

An einer Frontwand 114 des Aufliegers, welche in Figur 2B zu sehen ist, weist der Auflieger 110 ein zweites pneumatisches Steckelement 111 sowie zwei zweite elektrische Steckelemente 112 auf.

Das erste pneumatische Steckelement 15 der Verbindungseinrichtung 10 ist mit dem zweiten pneumatischen Steckelement 111 des Aufliegers 110 verbunden. Das erste elektrische Steckelement 16 ist mit einem der zweiten elektrischen Steckelemente 112 verbunden. Die erste Steckeinheit 20 hängt an den Leitungen 13, 14. Das Gewicht der ersten Steckeinheit 20 ist so bemessen, dass sich die erste Steckeinheit 20 oberhalb einer Unterkante 115 des Aufliegers 110 befindet. Auf diese Weise besteht keine Gefahr, dass ein Zugfahrzeug, welches mit dem Auflieger gekuppelt wird, die Steckeinheit 20 beschädigt.

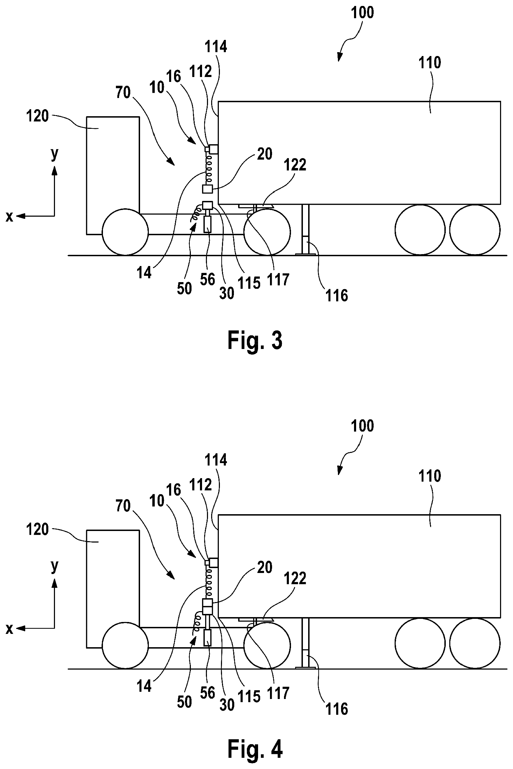

In Figur 3 ist ein Zwischenstadium des Kupplungsvorgangs zwischen Zugfahrzeug 120 und Auflieger 110 eines Sattelzuges 100 dargestellt. Das Zugfahrzeug 120 weist eine Hubsattelkupplung 122 auf. Der Königszapfen 117 des Aufliegers 110 ist bereits mechanisch mit der Hubsattelkupplung 122 verbunden.

Zur pneumatischen und elektrischen Verbindung von Auflieger 110 und Zugfahrzeug 120 ist eine Verbindungseinrichtung 10 vorgesehen. Zudem weist das Zugfahrzeug 120 ein Kupplungssystem 50 auf.

Das Kupplungssystem 50 weist einen ersten Aktuator 56 auf, an dem eine zweite Steckeinheit 30 angeordnet ist. Die zweite Steckeinheit 30 ist mittels des ersten Aktuators 56 in vertikaler Richtung (parallel zur y-Achse eines orthogonalen Koordinatensystems) ausfahrbar. Die x-Achse des Koordinatensystems erstreckt sich in Fahrtrichtung des Sattelzuges bei Geradeausfahrt, die y-Achse erstreckt sich in Gravitationsrichtung und die z-Achse liegt in der Horizontalen.

Die erste Steckeinheit 20 der Verbindungseinrichtung 10 ist oberhalb der Unterkante 115 des Aufliegers 110 angeordnet. Um die erste Steckeinheit 20 und die zweite Steckeinheit 30 miteinander zu verbinden, wird der erste Aktuator 56 in y-Richtung ausgefahren, was in Figur 4 dargestellt ist. In Figur 4 sind die erste Steckeinheit 20 und die zweite Steckeinheit 30 miteinander verbunden. Auf diese Weise bestehen zwischen dem Auflieger 110 und dem Zugfahrzeug 120 eine elektrische und eine pneumatische Verbindung. Eine Steuereinheit (nicht dargestellt) des Zugfahrzeugs 120 kann nun beispielsweise die Bremse des Aufliegers 110 lösen und betätigen sowie die Fahrzeugbeleuchtung des Aufliegers 110 steuern.

Die Verbindungseinrichtung 10 bildet gemeinsam mit dem Kupplungssystem 50 ein Verbindungssystem 70.

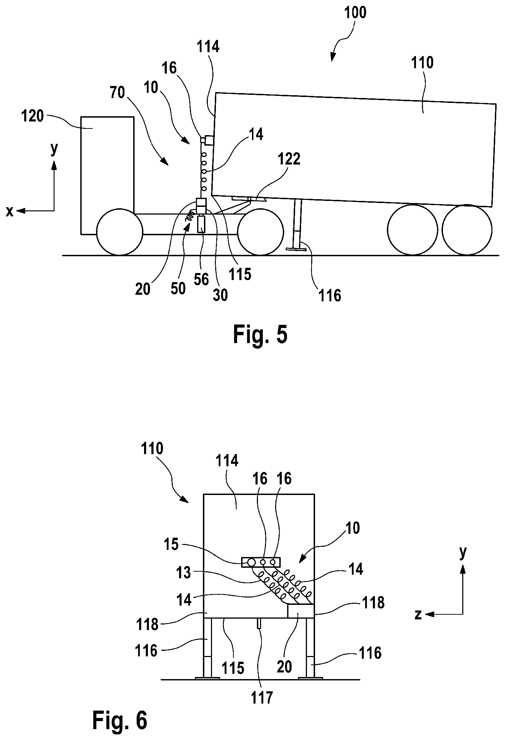

Um zu verhindern, dass das Kupplungssystem 50, die erste Steckeinheit 20, die zweite Steckeinheit 30 oder andere Komponenten während der Fahrt beschädigt werden, wird der Aktuator 56 nach dem Verbinden der ersten Steckeinheit 20 und der zweiten Steckeinheit 30 wieder eingefahren, was in Figur 5 dargestellt ist. Dabei wird die erste Steckeinheit 20 vollständig unter die Unterkante 115 des Aufliegers 110 bewegt.

In Figur 5 ist außerdem dargestellt, dass der Aufliegers 110 mittels der Hubsattelkupplung 122 angehoben wurde, so dass die Stützwinden 116 keinen Bodenkontakt mehr haben. Der Sattelzug 100 ist nun fahrbereit.

Zum Abstellen des Aufliegers 110 wird zunächst die Hubsattelkupplung 122 nach unten gefahren, so dass die Stützwinden 116 wieder auf dem Boden aufliegen. Anschließend werden erste Steckeinheit 20 und zweite Steckeinheit 30 voneinander getrennt. Eine Bewegung des Aktuators 56 ist dabei nicht erforderlich. Die Trennung der Trenneinheiten 20, 30 kann manuell oder automatisch erfolgen. Im Anschluss kann das Zugfahrzeug 120 einer anderen Aufgabe nachgehen.

Die Figur 6 zeigt eine weitere Ausführungsform der Verbindungseinrichtung 10. Die Verbindungseinrichtung 10 weist ein erstes pneumatisches Steckelement 15 und zwei erste elektrische Steckelemente 16 auf. Die erste Steckeinheit 20 ist mittels einer Pneumatikleitung 13 und zwei elektrischen Leitungen 14 mit den Steckelementen 15, 16 verbunden.

Die erste Steckeinheit 20 ist an einer Frontecke 118 des Aufliegers 110 angeordnet. Durch diese Anordnung der ersten Steckeinheit 20 wird die Automatisierbarkeit des Verbindungsvorgangs zwischen erster und zweiter Steckeinheit 20, 30 vereinfacht. Die Steckeinheit 20 befindet sich nämlich an einem vorbestimmten Ort und muss nicht von der ersten Steckeinheit 30 oder dem Kupplungssystem 50 lokalisiert werden, bevor die Verbindung hergestellt werden kann.

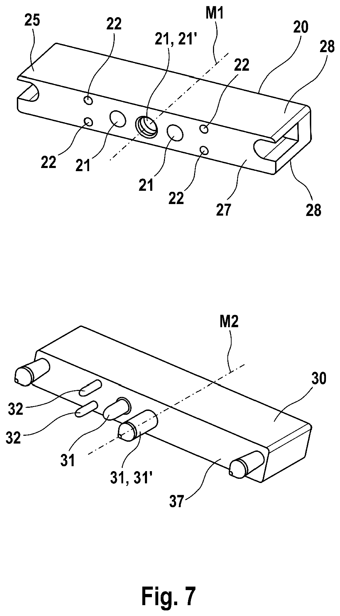

In Figur 7 ist eine erste Steckeinheit 20 und eine zweite Steckeinheit 30 dargestellt. Die Steckeinheiten 20, 30 sind zueinander komplementär und werden bei bestimmungsgemäßem Gebrauch so miteinander verbunden, dass ihre Stirnseiten 27, 37 aneinander anliegen.

Die erste Steckeinheit 20 weist insgesamt drei erste pneumatische Anschluss-elemente 21, 21' und vier erste elektrische Anschlusselemente 22 auf. Die Anschlusselemente 21, 21', 22 sind in einem gemeinsamen Gehäuse 25 zusammenfasst. Die ersten elektrischen Anschlusselemente 22 sowie zwei der ersten pneumatischen Anschlusselemente 21 sind in drehsymmetrischer Doppelbelegung um eine erste Mittelachse M1 vorgesehen. Ein zentral angeordnetes erstes pneumatisches Anschlusselement 21' ist nicht doppelt vorhanden.

Die Anschlusselemente 21, 21', 22 sind bei der dargestellten Ausführungsform buchsenförmig. Sie liegen demnach als zylinderförmige Vertiefungen ausgehend von der ersten Stirnseite 27 vor.

Die zweite Steckeinheit 30 weist eine Mittelachse M2 auf. Wenn die Steckeinheiten 20, 30 miteinander verbunden sind, liegen die Mittelachsen M1, M2 aufeinander. Auf der Mittelachse M2 ist ein zentral angeordnetes zweites pneumatisches Anschlusselement 31' vorgesehen. Zudem weist die zweite Steckeinheit 30 ein weiteres zweites pneumatisches Anschlusselement 31 sowie zwei zweite elektrische Anschlusselemente 32 auf.

Die Anschlusselemente 31, 32 sind bei der dargestellten Ausführungsform steckerförmig. Sie liegen demnach als zylinderförmige Vorsprünge ausgehend von der zweiten Stirnseite 37 vor.

Durch die drehsymmetrische Doppelbelegung der ersten Steckeinheit 20 ist es möglich, die erste Steckeinheit 20 und die zweite Steckeinheit 30 auf zwei unterschiedliche, zueinander um 180° um die Mittelachsen M1, M2 verdrehte Positionen miteinander zu verbinden.

Die erste Steckeinheit 20 ist quaderförmig und weist zwei längliche Außenseiten 28 auf. Die erste Steckeinheit 20 wird vorteilhafterweise so an dem Auflieger 110 angeordnet, dass sie mit einer der Außenseiten 28 an der Frontwand 114 des Aufliegers anliegt. Auf diese Weise wird eine stabile Lage der ersten Steckeinheit erreicht. Durch die drehsymmetrische Doppelbelegung ist es egal, mit welcher der beiden Außenseiten 28 die erste Steckeinheit 20 an dem Auflieger 110 anliegt. In beiden Fällen ist eine Verbindung zwischen erster Steckeinheit 20 und zweiter Steckeinheit 30 ohne weiteres möglich.

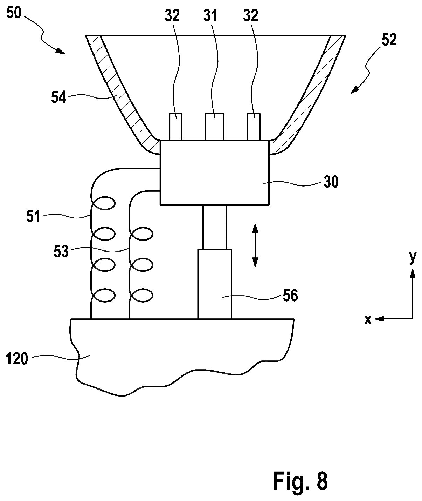

Figur 8 zeigt eine Ausführungsform des Kupplungssystems 50, welches an einem Zugfahrzeug 120 angeordnet ist. Das Kupplungssystem 50 umfasst eine Fangeinrichtung 52 mit einem Fangtrichter 54, eine zweite Steckeinheit 30 sowie einen ersten Aktuator 56. Die zweite Steckeinheit 30 ist am unteren Ende des Fangtrichters 54 angeordnet und weist ein zweites pneumatisches Anschlusselement 31 sowie zwei zweite elektrische Anschlusselemente 32 auf. Die zweite Steckeinheit 30 ist mittels einer Pneumatikleitung 51 sowie einer elektrischen Leitung 53 mit einer Steuereinrichtung (nicht dargestellt) des Zugfahrzeugs 120 verbunden.

Mittels des ersten Aktuators 56 können die zweite Steckeinheit 30 und der Fangtrichter 54 in vertikaler Richtung aus- und eingefahren werden. Wie bezüglich der Figur 4 beschrieben wurde, wird durch die Bewegung der zweiten Steckeinheit 30 die Verbindung mit der ersten Steckeinheit 20 (hier nicht dargestellt) ermöglicht. Der Fangtrichter 54 führt während des Verbindungsvorgangs die erste Steckeinheit 20 zu der zweiten Steckeinheit 30. Auf diese Weise wird sichergestellt, dass die erste Steckeinheit 20 und die zweite Steckeinheit 30 korrekt verbunden werden.

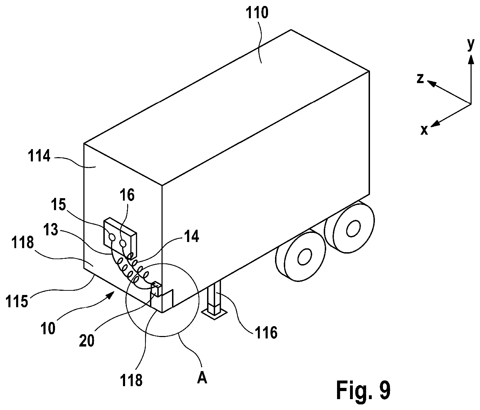

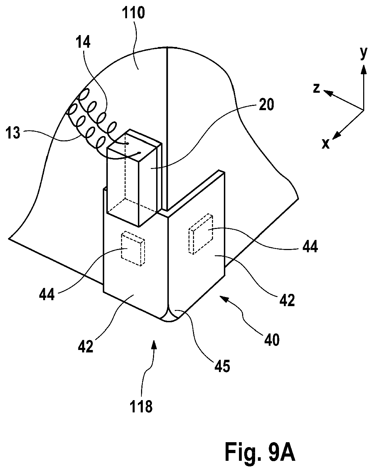

In den Figuren 9 und 9A ist eine weitere Ausführungsform der Verbindungseinrichtung 10 dargestellt. Die Verbindungseinrichtung 10 weist eine erste Steckeinheit 20 auf, welche über eine Pneumatikleitung 13 mit dem ersten pneumatischen Steckelement 15 und über eine elektrische Leitung 14 mit einem ersten elektrischen Steckelement 16 verbunden ist. Die Verbindungseinrichtung 10 weist ferner eine Befestigungseinrichtung 40 auf.

Die Befestigungseinrichtung 40 weist drei flache Seitenteile 42 auf, die jeweils in einem rechten Winkel zu den beiden anderen Seitenteilen 42 angeordnet sind, so dass sie eine gemeinsame Ecke 45 bilden. In Figur 9A sind nur zwei der drei Seitenteile 42 sichtbar.

Die Befestigungseinrichtung 40 ist an einer Frontecke 118 der Frontwand 114 des Aufliegers 110 angeordnet. In den Seitenteilen 42 befindet sich jeweils ein magnetisches Element 44, wodurch die Befestigungseinrichtung 40 an dem Auflieger 110, der im Bereich seiner Frontecke 118 magnetisierbar ist, fixiert ist.

Die erste Steckeinheit 20 ist mit der Befestigungseinrichtung 40 verbunden, beispielsweise durch eine Schraub- oder eine Schweißverbindung. Nach dem Verbinden der Steckelemente 15, 16 mit dem Auflieger 110 wird die mit der ersten Steckeinheit 20 verbundene Befestigungseinrichtung 40 an der Frontecke 118 des Aufliegerkoffers angebracht. Dadurch erhält die erste Steckeinheit eine definierte Anordnung an dem Auflieger 110.

Durch die definierte Anordnung der ersten Steckeinheit 20 wird auch durch diese Ausführung der Verbindungseinrichtung 10 die Automatisierbarkeit des Verbindungsvorgangs zwischen erster Steckeinheit 20 und zweiter Steckeinheit 30 vereinfacht, da zu Beginn des Verbindungsvorgangs die Position der ersten Steckeinheit 20 festgelegt ist und nicht erst ermittelt werden muss.

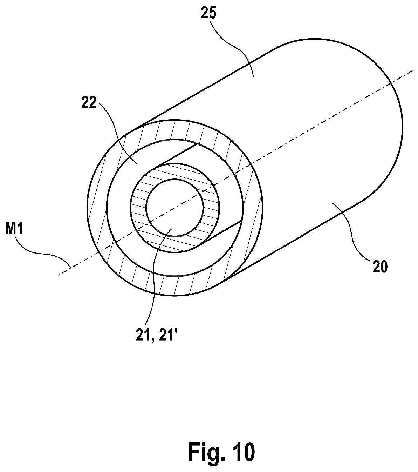

Die in Figur 10 dargestellte erste Steckeinheit 20 weist ein zylindrisches Gehäuse 25 mit einer Mittelachse M1 auf. In dem Gehäuse 25 sind zwei Anschlusselemente vorgesehen, ein erstes zentral angeordnetes pneumatisches Anschlusselement 21' und ein erstes elektrisches Anschlusselement 22. Das erste zentral angeordnete pneumatische Anschlusselement 21' ist eine zylindrische Buche, das erste elektrische Anschlusselement 22 ist ein ringförmiger Schlitz. Die Anschlusselemente 21',22 sind konzentrisch angeordnet. Eine komplementäre zweite Steckeinheit (hier nicht dargestellt) weist zweite Anschlusselemente in Form von Vorsprüngen auf, welche in die ersten Anschlusselemente der ersten Steckeinheit 20 hineinragen, wenn die Steckeinheiten miteinander verbunden sind. Für die Verbindung der pneumatischen Anschlusselemente kann zumindest eines der pneumatischen Anschlusselemente mit einem Dichtelement versehen sein.

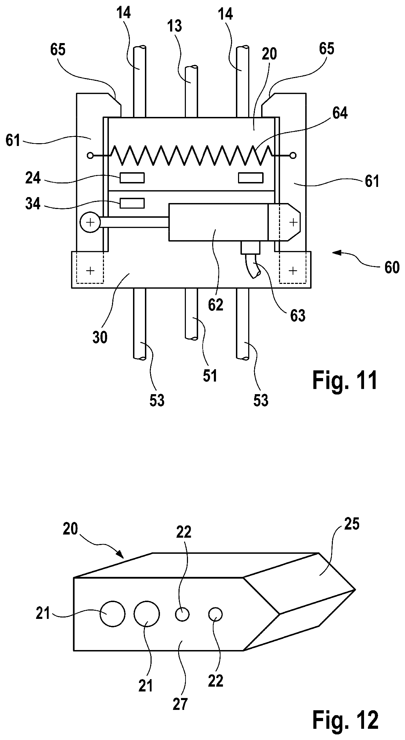

Figur 11 zeigt eine erste Steckeinheit 20 mit einer hierzu komplementären zweiten Steckeinheit 30. An die erste Steckeinheit 20 sind eine Pneumatikleitung 13 und zwei elektrische Leitungen 14 angeschlossen. An die zweite Steckeinheit 30 sind eine Pneumatikleitung 51 und zwei elektrische Leitungen 53 angeschlossen.

Die zweite Steckeinheit 30 weist ein Arretiermittel 60 auf, welches die Steckeinheiten 20, 30 nach dem Zusammenstecken zusammenhält und ein unmittelbares Trennen der Steckeinheiten 20, 30 verhindert. Das Arretiermittel 60 kann bei anderen Ausführungsformen auch an der ersten Steckeinheit 20 angeordnet sein. Es ist bei anderen Ausführungsformen außerdem möglich, dass einzelne Bestandteile des Arretiermittels 60 auf die Steckeinheiten 20, 30 verteilt sind.

Das Arretiermittel 60 weist zwei Arretierhaken 61 auf, welche in dem in Figur 11 dargestellten Zustand die erste Steckeinheit 20 formschlüssig hintergreifen. Eine Arretierfeder 64 verhindert, dass sich die beiden Arretierhaken 61 auseinanderbewegen und der Formschluss gelöst wird. Jeder Arretierhaken 61 weist eine Schräge 65 auf. Die Schrägen 65 bewirken, dass sich die Arretierhaken 61 beim Zusammenstecken der Steckeinheiten 20, 30 auseinanderbewegen, so dass die erste Steckeinheit 20 zwischen die Arretierhaken 61 treten kann. Ist die in Figur 11 dargestellte Endposition des Steckvorgangs erreicht, wird durch die Arretierfeder 64 der Formschluss hergestellt.

Zum automatischen Lösen der Arretierung ist ein zweiter Aktuator 62 vorgesehen, der mit den zwei Arretierhaken 61 verbunden ist. Der zweite Aktuator 62 kann über eine Steuerleitung 63 angesteuert werden. Bei einem Ansteuern des zweiten Aktuators 62 werden die Arretierhaken 61 gegen die Federkraft der Arretierfeder 64 auseinandergedrückt und der Formschluss wird gelöst. Anschließend können die zwei Steckeinheiten 20, 30 auseinandergezogen werden, wodurch deren Verbindung gelöst wird.

Die erste Steckeinheit 20 weist eine erste Ortungseinrichtung 24 und die zweite Steckeinheit 30 eine zweite Ortungseinrichtung 34 auf. Von den Ortungseinrichtungen 24, 34 ist bevorzugt eine als Sender und eine als Empfänger ausgebildet. Die Ortungseinrichtungen 24, 34 können beispielsweise auf RFID, NFC oder Bluetooth Low Energy Technologie basieren. Durch die Ortungseinrichtungen 24, 34 kann ermittelt werden, ob die Steckeinheiten 20, 30 auf die gewünschte Art und Weise aneinander befestigt sind.

In Figur 12 ist eine weitere Ausführungsform einer ersten Steckeinheit 20 dargestellt. Die erste Steckeinheit 20 weist nebeneinander in einer Reihe zwei erste pneumatische Anschlusselemente 21 und zwei erste elektrische Anschlusselemente 22 auf. Die erste Steckeinheit 20 weist ferner ein Gehäuse 25 mit einer nicht rotationssymmetrischen Außenkontur auf. Bei der dargestellten Ausführungsform weist das Gehäuse 25 einen fünfeckigen Querschnitt auf. Bei anderen Ausführungsformen kann dieser Querschnitt abweichen, wobei jeweils darauf zu achten ist, dass der Querschnitt nicht rotationssymmetrisch ist. Auf diese Weise wird verhindert, dass eine komplementäre zweite Steckeinheit 30 (hier nicht dargestellt) auf zwei verschiedene Arten mit der ersten Steckeinheit 20 verbunden werden kann. Eine fehlerhafte Verbindung der beiden Steckeinheiten 20, 30 wird dadurch vermieden.

Bestimmte Ausführungsformen der vorliegenden Erfindung können die nachfolgend aufgeführten Merkmalsgruppen umfassen.

### Merkmalsgruppe 1

Verbindungseinrichtung zum Verbinden von elektrischen und pneumatischen Leitungen zwischen einem Zugfahrzeug und einem Auflieger, mit einem ersten Ende, einem zweiten Ende und mindestens zwei die beiden Enden verbindenden Leitungen, wobei an dem ersten Ende zumindest ein erstes pneumatisches Steckelement und/oder zumindest ein erstes elektrisches Steckelement angeordnet ist, und wobei an dem zweiten Ende eine erste Steckeinheit angeordnet ist, die zumindest ein erstes pneumatisches Anschlusselement und/oder zumindest ein erstes elektrisches Anschlusselement aufweist.

### Merkmalsgruppe 2

Verbindungseinrichtung nach Merkmalsgruppe 1, wobei die erste Steckeinheit ein nicht rotationssymmetrisches Gehäuse aufweist oder die ersten Anschlusselemente zumindest teilweise in drehsymmetrischer Doppelbelegung vorgesehen sind oder das erste pneumatische und das erste elektrische Anschlusselement konzentrisch angeordnet sind.

### Merkmalsgruppe 3

Verbindungseinrichtung nach einer der vorhergehenden Merkmalsgruppen, mit zumindest einer Befestigungseinrichtung, mittels der die erste Steckeinheit an einem vorbestimmten Ort an dem Auflieger befestigbar ist.

### Merkmalsgruppe 4

Verbindungseinrichtung nach einer der vorhergehenden Merkmalsgruppen, wobei die erste Steckeinheit eine erste Ortungseinrichtung aufweist.

### Merkmalsgruppe 5

Verbindungseinrichtung nach einer der vorhergehenden Merkmalsgruppen, wobei die erste Steckeinheit ein gemeinsames Gehäuse für die ersten pneumatischen und elektrischen Anschlusselemente aufweist oder die erste Steckeinheit ein erstes Gehäuse für die ersten pneumatischen Anschlusselemente und ein zweites Gehäuse für die ersten elektrischen Anschlusselemente aufweist, wobei die Gehäuse miteinander verbunden sind.

### Merkmalsgruppe 6

Verbindungssystem für einen Sattelzug mit einer Verbindungseinrichtung gemäß einer der vorhergehenden Merkmalsgruppen und mit einem auf einem Zugfahrzeug des Sattelzugs anbringbaren Kupplungssystem mit einer zweiten Steckeinheit, die komplementär zu der ersten Steckeinheit ausgebildet ist und zumindest ein zweites pneumatisches Anschlusselement und zumindest ein zweites elektrisches Anschlusselement aufweist.

### Merkmalsgruppe 7

Verbindungssystem nach Merkmalsgruppe 6, wobei die zweiten Anschlusselemente zumindest teilweise in drehsymmetrischer Doppelbelegung vorgesehen sind oder das zweite pneumatische und das zweite elektrische Anschlusselement konzentrisch angeordnet sind.

### Merkmalsgruppe 8

Verbindungssystem nach Merkmalsgruppe 6 oder 7, wobei das Kupplungssystem eine Fangeinrichtung zum Einfangen der ersten Steckeinheit aufweist.

### Merkmalsgruppe 9

Verbindungssystem nach einer der Merkmalsgruppen 6 bis 8, wobei die Fangeinrichtung zusammen mit der zweiten Steckeinheit mittels eines pneumatischen und/oder hydraulischen und/oder elektrischen ersten Aktuators ausfahrbar ist.

### Merkmalsgruppe 10

Verbindungssystem nach einer der Merkmalsgruppen 6 bis 9, wobei die erste Steckeinheit und/oder die zweite Steckeinheit zumindest ein Arretiermittel zur lösbaren Befestigung der Steckeinheiten aneinander aufweist.

### Merkmalsgruppe 11

Sattelzug mit einem Zugfahrzeug, einem Auflieger und einer Verbindungseinrichtung nach einer der Merkmalsgruppen 1 bis 5 oder einem Verbindungssystem nach einer der Merkmalsgruppen 6 bis 10, wobei der Auflieger zweite pneumatische und elektrische Steckelemente aufweist, die komplementär zu den ersten Steckelementen der Verbindungseinrichtung sind.

### Merkmalsgruppe 12

Sattelzug nach Merkmalsgruppe 11, wobei das Zugfahrzeug autonom ist und einen Antrieb, eine Steuereinheit zur Steuerung des Antriebs, eine Kommunikationseinheit zum Informationsaustausch mit einem Verkehrsleitsystem sowie eine Ortungseinheit zur Lokalisierung des Zugfahrzeugs aufweist.

### Merkmalsgruppe 13

Sattelzug nach Merkmalsgruppe 11 oder 12, wobei die erste Steckeinheit an einer Frontwand des Aufliegers befestigt ist.

### Merkmalsgruppe 14

Sattelzug nach einer der Merkmalsgruppen 11 bis 13, wobei die Haltekraft der Befestigungseinrichtung der ersten Steckeinheit am Auflieger größer ist als die Steck- und Lösekräfte von erster und zweiter Steckeinheit .

### Merkmalsgruppe 15

Sattelzug nach einer der Merkmalsgruppen 11 bis 14, wobei die zweite Steckeinheit eine zweite Ortungseinrichtung aufweist, welche mit der ersten Ortungseinrichtung der ersten Steckeinheit zusammenwirkt.

### Bezugszeichenliste

- 10: Verbindungseinrichtung
- 11: erstes Ende
- 12: zweites Ende
- 13: Pneumatikleitung
- 14: elektrische Leitung
- 15: erstes pneumatisches Steckelement
- 16: erstes elektrisches Steckelement

- 20: erste Steckeinheit
- 21: erstes pneumatisches Anschlusselement
- 21': zentral angeordnetes erstes pneumatisches Anschlusselement
- 22: erstes elektrisches Anschlusselement
- 24: erste Ortungseinrichtung
- 25: Gehäuse
- 27: erste Stirnseite
- 28: Außenseite

- 30: zweite Steckeinheit
- 31: zweites pneumatisches Anschlusselement
- 31': zentral angeordnetes zweites pneumatisches Anschlusselement
- 32: zweites elektrisches Anschlusselement
- 34: zweite Ortungseinrichtung
- 37: zweite Stirnseite

- 40: Befestigungseinrichtung
- 42: Seitenteil
- 44: magnetisches Element
- 45: Ecke

- 50: Kupplungssystem
- 51: Pneumatikleitung
- 52: Fangeinrichtung
- 53: elektrische Leitung
- 54: Fangtrichter
- 56: erster Aktuator
- 60: Arretiermittel
- 61: Arretierhaken
- 62: zweiter Aktuator
- 63: Steuerleitung
- 64: Arretierfeder
- 65: Schräge

- 70: Verbindungssystem

- 100: Sattelzug

- 110: Auflieger
- 111: zweites pneumatisches Steckelement
- 112: zweites elektrisches Steckelement
- 114: Frontwand
- 115: Unterkante
- 116: Stützwinde
- 117: Königszapfen
- 118: Frontecke

- 120: Zugfahrzeug
- 122: Hubsattelkupplung

- M1: Mittelachse
- M2: Mittelachse

## Patentansprüche

1. Kupplungsvorgang zwischen einem Zugfahrzeug (120) und einem Auflieger (110) mittels einer Verbindungseinrichtung (10) zum Verbinden von elektrischen und pneumatischen Leitungen zwischen einem Zugfahrzeug (120) und einem Auflieger (110),
wobei die Verbindungseinrichtung (10) ein erstes Ende (11), ein zweites Ende (12) und mindestens zwei die beiden Enden (11, 12) verbindende Leitungen (13, 14) aufweist,
wobei an dem ersten Ende (11) zumindest ein erstes pneumatisches Steckelement (15) und/oder zumindest ein erstes elektrisches Steckelement (16) angeordnet ist, und
wobei an dem zweiten Ende (12) eine erste Steckeinheit (20) angeordnet ist, die zumindest ein erstes pneumatisches Anschlusselement (21) und zumindest ein erstes elektrisches Anschlusselement (22) aufweist,
wobei das Zugfahrzeug (120) eine zweite Steckeinheit (30) aufweist, die komplementär zu der ersten Steckeinheit (20) ausgebildet ist und zumindest ein zweites pneumatisches Anschlusselement (31) und zumindest ein zweites elektrisches Anschlusselement (32) aufweist,
wobei zunächst die Steckelemente (15, 16) der Verbindungseinrichtung (10) mit Steckelementen (111, 112) des Aufliegers (110) gekoppelt werden und anschließend die Anschlusselemente (21, 22, 31, 32) der ersten Steckeinheit (20) und der zweiten Steckeinheit (30) miteinander verbunden werden,
wobei die erste Steckeinheit (20) vor dem Verbinden der Anschlusselemente (21, 22, 31, 32) an einem vorbestimmten Ort des Aufliegers (110) angeordnet wird,
und der Kupplungsvorgang zwischen erster Steckeinheit (20) und zweiter Steckeinheit (30) dann automatisiert erfolgt.

2. Kupplungsvorgang nach Anspruch 1, wobei an dem Zugfahrzeug (120) ein Kupplungssystem (50) angebracht ist, das einen ersten Aktuator (56) aufweist, an dem die zweite Steckeinheit (30) angeordnet ist, wobei die zweite Steckeinheit (30) mittels des ersten Aktuators (56) ausfahrbar ist, insbesondere in vertikaler Richtung und/oder in Richtung der ersten Steckeinheit (20).

3. Kupplungsvorgang nach Anspruch 2, wobei der Aktuator (56) nach dem Verbinden der ersten Steckeinheit (20) und der zweiten Steckeinheit (30) wieder eingefahren wird, wobei die erste Steckeinheit (20) bevorzugt vollständig unter die Unterkante (115) des Aufliegers (110) bewegt wird.

4. Kupplungsvorgang nach Anspruch 2 oder 3, wobei das Kupplungssystem (50) eine Fangeinrichtung (52) zum Einfangen der ersten Steckeinheit (20) aufweist, wobei die Fangeinrichtung (52) es ermöglicht, die erste Steckeinheit (20) im Rahmen des automatisierten Verbindungsvorgangs so einzufangen, dass sie mit der zweiten Steckeinheit (30) auf einfache Weise verbunden werden kann.

5. Kupplungsvorgang nach Anspruch 4, wobei die Fangeinrichtung (52) zusammen mit der zweiten Steckeinheit (30) mittels des ersten Aktuators (56) ausfahrbar ist, insbesondere höhenverstellbar, wobei der erste Aktuator (56) pneumatisch und/oder hydraulisch und/oder elektrisch ist, wobei zur Verbindung der beiden Steckeinheiten (20, 30) miteinander die zweite Steckeinheit (30) mittels des ersten Aktuators (56) in Richtung der ersten Steckeinheit (20) bewegt wird, bis die Steckeinheiten (20, 30) verbunden sind.

6. Kupplungsvorgang nach einem der vorhergehenden Ansprüche, wobei der Auflieger (110) zwei Stützwinden (116) und das Zugfahrzeug (120) eine Hubsattelkupplung (122) aufweist und wobei zum Abstellen des Aufliegers (110) zunächst die Hubsattelkupplung (122) nach unten gefahren wird, so dass die Stützwinden (116) auf dem Boden aufliegen, wobei anschließend die erste Steckeinheit (20) und die zweite Steckeinheit (30) voneinander getrennt werden, wobei die Trennung der Steckeinheiten (20, 30) manuell oder automatisch erfolgt.

7. Kupplungsvorgang nach einem der vorhergehenden Ansprüche, wobei die erste Steckeinheit (20) und/oder die zweite Steckeinheit (30) zumindest ein Arretiermittel (60) zur lösbaren Befestigung der Steckeinheiten (20, 30) aneinander aufweist, wobei die Befestigung der Arretiermittel (60) bevorzugt magnetisch und/oder pneumatisch und/oder mittels Reibschluss und/oder mittels Formschluss erfolgt.

8. Kupplungsvorgang nach Anspruch 7, wobei die Arretiermittel (60) automatisch lösbar sind.

9. Kupplungsvorgang nach einem der vorhergehenden Ansprüche, wobei die Position der ersten Steckeinheit (20) mittels einer ersten Ortungseinrichtung (24) bestimmt wird.

10. Kupplungsvorgang nach einem der vorhergehenden Ansprüche, wobei die zweite Steckeinheit (30) eine zweite Ortungseinrichtung (34) aufweist, welche mit der ersten Ortungseinrichtung (24) der ersten Steckeinheit (20) zusammenwirkt, wobei die Relativposition der zweiten Steckeinheit (30) zu der ersten Steckeinheit (20) ermittelt und anschließend für die Automatisierung des Verbindungsvorgangs verwendet wird.

11. Kupplungsvorgang nach einem der vorhergehenden Ansprüche, wobei zunächst die Verbindungseinrichtung (10) manuell an dem Auflieger (110) angebracht wird und ein autonomes Zugfahrzeug (120) den Auflieger (110) zu einem späteren Zeitpunkt abholt.

12. Verbindungseinrichtung (10) zum Verbinden von elektrischen und pneumatischen Leitungen zwischen einem Zugfahrzeug (120) und einem Auflieger (110),
mit einem ersten Ende (11), einem zweiten Ende (12) und mindestens zwei die beiden Enden (11, 12) verbindenden Leitungen (13, 14),
wobei an dem ersten Ende (11) zumindest ein erstes pneumatisches Steckelement (15) und zumindest ein erstes elektrisches Steckelement (16) angeordnet ist, und
wobei an dem zweiten Ende (12) eine erste Steckeinheit (20) angeordnet ist, die zumindest ein erstes pneumatisches Anschlusselement (21) und zumindest ein erstes elektrisches Anschlusselement (22) aufweist,
wobei die ersten Steckelemente (15, 16) komplementär zu zweiten pneumatischen und elektrischen Steckelementen (111, 112) des Aufliegers (110) sind und die erste Steckeinheit (20) komplementär zu einer zweiten Steckeinheit (30) des Zugfahrzeugs (120) ist,
wobei die Verbindungseinrichtung ferner eine Befestigungseinrichtung (40) aufweist, mittels der die erste Steckeinheit (20) an einem vorbestimmten Ort an dem Auflieger (110) befestigbar ist, um einen automatisierten Verbindungsvorgang zwischen erster Steckeinheit (20) und zweiter Steckeinheit (30) zu ermöglichen,
wobei entweder die Befestigungseinrichtung (40) einteilig ausgebildet, an der ersten Steckeinheit (20) befestigt und lösbar mit dem Auflieger (110) verbindbar ist oder die Befestigungseinrichtung (40) mehrteilig ausgebildet ist und einen ersten Teil und einen zweiten Teil aufweist, wobei der erste Teil permanent an dem Auflieger (110) anordenbar ist und der zweite Teil mit dem ersten Teil lösbar verbunden ist.

13. Verbindungseinrichtung (10) nach Anspruch 12, ferner mit zumindest einer Befestigungseinrichtung (40), mittels der die erste Steckeinheit (20) an einem vorbestimmten Ort an dem Auflieger (110) befestigbar ist und wobei die Befestigungseinrichtung (40) mindestens teilweise magnetisch ist oder zumindest ein magnetisches Element aufweist.

14. Verbindungssystem (70) für einen Sattelzug (100) mit einer Verbindungseinrichtung (10) gemäß Anspruch 12 oder 13 und mit einem auf einem Zugfahrzeug (120) des Sattelzugs (100) anbringbaren Kupplungssystem (50) mit einer zweiten Steckeinheit (30), die komplementär zu der ersten Steckeinheit (20) ausgebildet ist und zumindest ein zweites pneumatisches Anschlusselement (31) und zumindest ein zweites elektrisches Anschlusselement (32) aufweist.

15. Verbindungssystem (70) nach Anspruch 14, wobei das Kupplungssystem (50) eine Fangeinrichtung (52) zum Einfangen der ersten Steckeinheit (20) aufweist und/oder wobei das Kupplungssystem (50) einen ersten Aktuator (56) aufweist, an dem die zweite Steckeinheit (30) angeordnet ist, wobei die zweite Steckeinheit (30) mittels des ersten Aktuators (56) in vertikaler Richtung ausfahrbar ist.
